# DEMANDE DE BREVET EUROPEEN

(11) **EP 4 579 360 A1**
(43) Date de publication de la demande: **02.07.2025**
(21) Numéro de dépôt: 23220359.6
(22) Date de dépôt: 27.12.2023
(51) Int. Cl.: G04B 13/02, G04B 19/04

(54) **DISPOSITIF DE MAINTIEN D'UN MOBILE**

(71) Demandeur: ETA SA Manufacture Horlogère Suisse, 2540 Grenchen (CH)
(72) Inventeur: BALMER, Raphaël, 2824 Vicques (CH); COURVOISIER, Raphaël, 2035 Corcelles (CH)
(74) Mandataire: ICB SA

(57) **Abrégé**

L'invention concerne un dispositif pour maintenir axialement un mobile (2) de mouvement horloger (100) autour d'un arbre (3), le mobile (2) comprenant une partie cylindrique (4) agencée pour être montée coaxialement sur l'arbre (3), le dispositif comprenant un clip (1) destiné à être monté sur la partie cylindrique (4) du mobile (2). Selon l'invention, le clip (1) comprend des moyens de maintien élastiques (10, 11) agencés pour coopérer avec la partie cylindrique (4) et enserrer la partie cylindrique sur une partie de son pourtour, et en ce qu'il comprend un bec (12) de verrouillage traversant une ouverture (41) s'étendant radialement vers l'intérieur de la partie cylindrique, le bec de verrouillage (12) étant agencé pour coopérer avec une gorge (30) de l'arbre (3) pour maintenir axialement le mobile (2) en place.

## Description

### Domaine technique de l'invention

L'invention se rapporte au domaine de l'horlogerie, et en particulier le domaine des montres. L'invention concerne plus particulièrement un dispositif de maintien et de guidage en rotation d'un mobile d'un mouvement horloger.

### Arrière-plan technologique

L'état de la technique comprend de nombreux documents relatifs aux dispositifs de maintien de mobile.

Il est connu de fixer les mobiles d'un mouvement au moyen d'une vis, en les chassant sur un axe ou en utilisant une bague de maintien. Par exemple, les disques d'affichage de phases de lune sont généralement maintenus par une vis ou un axe en leur centre, voire par une bague de guidage, ce qui peut augmenter l'épaisseur du mouvement.

Une autre manière classique de guider un mobile d'horlogerie est de le faire pivoter entre deux paliers, chacun porté par une ébauche (platine, pont, plaque de maintien... ).

Pour des questions de fonctionnalité, notamment d'usure et de lubrification, un palier est généralement un composant assemblé à une ébauche et nécessite donc des opérations d'assemblage. Le palier peut être métallique ou minéral, on connait des paliers en laiton, en bronze, etc., ou des paliers en céramique, en rubis, etc.

Cette architecture demande donc la fabrication et l'assemblage de différents composants et s'avère couteuse tant en terme économique qu'en terme de place consommée dans le mouvement.

Une manière économique de résoudre le problème est de supprimer purement et simplement l'une des ébauches. Si le mobile en question est une roue des heures, celle-ci est insérée sur la chaussée qui fait office de guidage radial et d'élément de butée axiale, dans un seul sens (vers le côté rouage).

Dans l'autre sens (vers le coté cadran), la roue d'heure n'est pas retenue tant que le cadran de la montre n'est pas posé. Dans ce cas, il n'est pas possible de proposer un mouvement sans cadran, tel un mouvement dit « squelette », car, sans butée axiale côté cadran, le mobile ne restera pas en position. On comprend également que la livraison d'un tel mouvement en vue de l'insérer dans une boite de montre, ne peut se faire aisément avec ce genre de mobile.

Différentes solutions existent, mais elles présentent toutes des inconvénients :
- le mobile doit être livré en tant que pièce détachée. De ce fait, la lubrification, qui est très délicate, devra être réalisée par l'emboiteur (non expérimenté en la matière) et non par l'assembleur du mouvement ;
- le mouvement doit être livré dans une calotte dont le couvercle fait office de butée. Si le mobile en question est une roue des heures, ce mobile existera en différentes longueurs afin de pouvoir dépasser de manière adaptée aux différentes épaisseurs de cadran qui seront montés sur ce mouvement. Cette solution résout le problème de lubrification mais force l'utilisation d'un couvercle de calotte adapté à chaque longueur de mobile, ce qui complexifie beaucoup la logistique ;
- le mouvement doit être livré avec un clip de maintien. Ce clip doit être inséré lors de l'assemblage du mouvement. Il résout la problématique de la lubrification et de la logistique des calottes. Cependant, ce composant doit être fabriqué et assemblé uniquement afin de pouvoir livrer un mouvement à un emboiteur. Au vu de la petite taille du composant, il est difficile de le laver et de le reconditionner, ce composant est donc difficilement réutilisable. Finalement, lors de son retrait, le risque est grand que le mouvement soit endommagé, par exemple à cause d'une force excessive due à une mauvaise direction d'extraction, ou soit rayé par la pince d'extraction.

On notera qu'aucune des solutions proposées ne résout le problème d'un mouvement sans cadran. En effet, les solutions énoncées ne permettent de livrer qu'un mouvement à un emboiteur, mais en aucun cas à le maintenir dans un état fonctionnel une fois emboité.

L'état de l'art n'offre pas de solution abordable et facile à mettre en place, il existe par conséquent un besoin de proposer une alternative aux solutions existantes.

### Résumé de l'invention

La présente invention a pour but de pallier les inconvénients de l'art antérieur en proposant de fournir un dispositif de maintien axial de deux éléments coaxiaux, dont au moins l'un est rotatif, par l'insertion radiale d'un clip n'engendrant pas ou très peu de couple de friction avec le premier élément bien qu'étant solidaire du deuxième élément.

Ainsi, l'invention concerne un dispositif pour maintenir axialement un mobile de mouvement horloger autour d'un arbre, le mobile comprenant une partie cylindrique agencée pour être montée coaxialement sur l'arbre, le dispositif comprenant un clip destiné à être monté sur la partie cylindrique du mobile.

Selon l'invention, le clip comprend des moyens de maintien élastiques agencés pour coopérer avec une rainure formée sur la partie cylindrique et enserrer la rainure, et comprend un bec de verrouillage traversant une ouverture s'étendant radialement vers l'intérieur de la partie cylindrique, et coopérant avec une gorge de l'arbre pour maintenir axialement le mobile en place.

Conformément à d'autres variantes avantageuses de l'invention :
- la partie cylindrique comprend une rainure formée sur tout ou partie de son pourtour ;
- le clip présente un corps d'anneau présentant deux bras à extrémités ouvertes, au moins l'un des deux bras étant déformable élastiquement, les bras formant les moyens de maintien ;
- le clip présente un rayon intérieur inférieur au rayon de la partie cylindrique ou de la rainure pour obtenir une déformation élastique des moyens de maintien élastique et assurer son maintien sans jeu sur la partie cylindrique ;
- le clip comprend des moyens de manipulation ;
- le bec est placé à l'une des extrémités ouvertes ;
- le corps d'anneau présente deux arcs de cercle par bras ;
- le bec de verrouillage présente une longueur supérieure à la profondeur de l'ouverture ;
- le clip est fabriqué à partir d'un fil ;
- le clip présente une forme elliptique de manière que seules les extrémités des bras reposent dans la rainure contre le pourtour de la partie cylindrique et le bec de verrouillage dans l'ouverture ;
- le dispositif comprend un clinquant disposé sur le mobile, le clip maintenant à la fois le mobile et le clinquant.

Dans un autre aspect, l'invention concerne un mouvement comprenant un dispositif conforme à l'invention.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 est une représentation en perspective du dispositif selon l'invention, en position verrouillée ;
- la figure 2 est une représentation en perspective du dispositif selon l'invention, en position déverrouillée ;
- la figure 3 est une vue en coupe d'un dispositif selon l'invention ;
- les figures 4a à 4d illustrent des modes de réalisation alternatifs selon l'invention.

### Description détaillée de l'invention

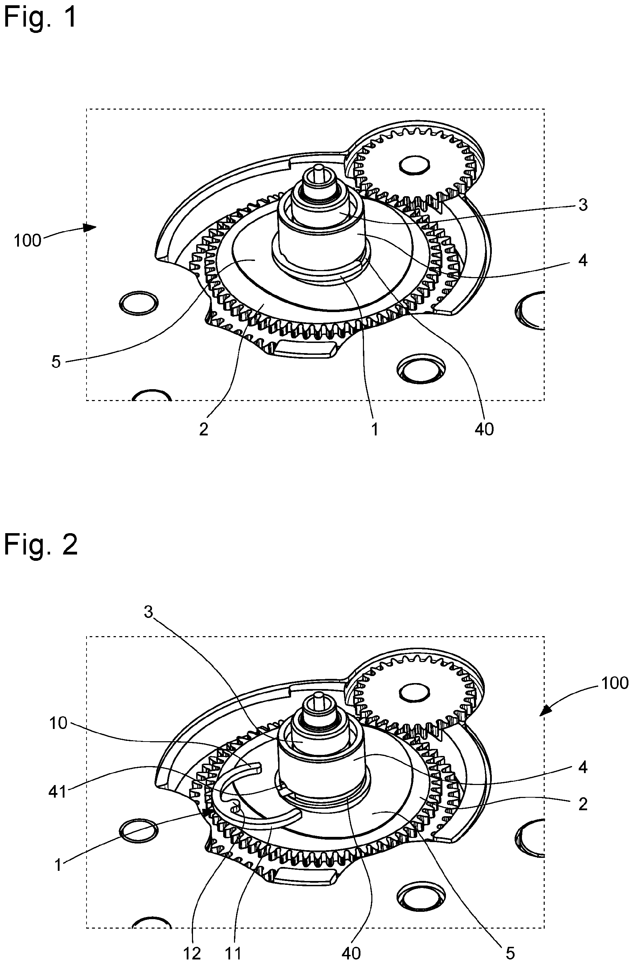

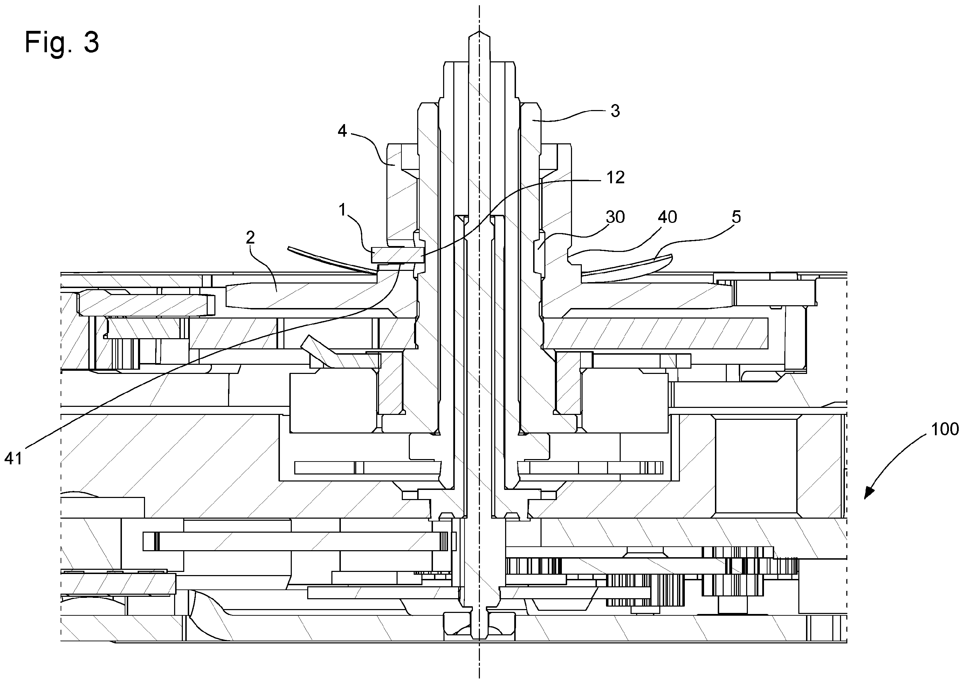

Un dispositif de maintien d'une roue des heures sur un canon selon l'invention va maintenant être décrit à titre d'exemple dans ce qui suit faisant référence conjointement aux figures 1 à 3. Un homme du métier n'aura aucune difficulté à s'adapter à tout autre type de mobile pivotant autour d'un arbre rotatif ou non.

Selon le mode de réalisation illustré, le mouvement horloger est destiné à la conception d'une pièce d'horlogerie comportant un mobile d'affichage des heures et comprend de ce fait un dispositif d'entraînement de ce mobile, la structure d'un tel dispositif d'entrainement étant connue elle ne sera pas décrite davantage ici.

Bien évidemment l'invention s'applique à tout type de mobile pivotant autour d'un arbre, par exemple un mobile d'affichage de phase de lune, des minutes, de quantième, une bascule ou encore un renvoi.

L'invention concerne un dispositif de maintien d'un mobile 2, tel qu'une roue d'un mouvement horloger 100, monté sur un arbre 3. Le dispositif comprend un clip 1 destiné à être monté sur le canon 4 du mobile 2 et à coopérer avec l'arbre 3, entre une première et une seconde position.

Avantageusement, le clip 1 comprend des moyens de maintien élastiques 10, 11 se présentant sous la forme de deux bras destinés à coopérer avec le canon 4, ou avec une rainure 40 pratiquée dans ce canon, ainsi qu'un bec de verrouillage 12 destiné à coopérer successivement avec une ouverture 41 du canon 4 et une gorge 30 de l'arbre 3 pour maintenir le mobile 2 axialement sur l'arbre 3 dans la première position et laisser ce mobile 2 axialement libre dans la seconde position, le clip 1 étant agencé pour pouvoir se déplacer en translation, entre la première position, dite position verrouillée, et la deuxième position, dite position déverrouillée ou libre dans laquelle il peut être retiré.

Tel que visible sur la figure 1, Le clip 1 se présente sous la forme d'un corps d'anneau avec deux bras 10, 11 à extrémités ouvertes (ou libres), chaque bras étant déformable élastiquement pour serrer la rainure 40 lorsque le clip 1 est monté sur le canon 4, la rainure 40 s'étendant en continu (ou partiellement) sur la circonférence du canon 4.

Comme représenté sur les figures, le clip 1 présente également un bec de verrouillage 12 qui se trouvent dans le même plan que le plan formé par les deux bras 10, 11.

Le clip 1 comprend un bec de verrouillage 12 qui traverse l'ouverture 41 formée dans le canon 4 et dont l'extrémité vient reposer dans la gorge 30 de l'arbre 3 pour maintenir le mobile 2 axialement sur l'arbre 3, le clip 1 empêchant ainsi le mobile 2 de coulisser le long de l'arbre 3.

Le bec de verrouillage 12 présente une longueur supérieure à la profondeur de l'ouverture 41, et légèrement inférieure à la distance entre le fond de la gorge 30 et la base du bec 12, pour éviter une friction entre le bec 12 et l'arbre 3 et assurer un maintien fiable du mobile 2 sur l'arbre 3.

La coopération des moyens de maintien élastiques 10, 11 avec la rainure 40 permet à la fois de guider et de maintenir de manière fiable le clip 1 sur le mobile 2. Ainsi, une fois le clip 1 en place, le mobile 2 ne peut pas se déloger de l'arbre 3 étant donné que le clip 1 empêche le mobile 2 de se déplacer axialement le long de l'arbre 3. Un tel agencement est particulièrement intéressant pour la livraison de mouvements avant de les emboiter, les mobiles peuvent ainsi être montés et maintenus en place lors de la livraison des mouvements.

Avantageusement, le clip 1 permet d'enserrer uniquement le canon 4, et ainsi aucun couple de serrage n'est transmis à l'arbre 3.

Selon le mode de réalisation illustré à la figure 2, les bras 10, 11 du clip 1 présente un rayon intérieur inférieur au rayon du canon 4 ou de la rainure 40 pour obtenir une déformation élastique des bras 10, 11 du clip 1 et assurer son maintien sans jeu sur le canon 4.

On remarquera également que le clip 1 permet de maintenir axialement des éléments autres que le mobile 2, tel qu'un clinquant 5 disposé sur le mobile 2 par exemple. Le clip 1 permet ainsi de maintenir axialement plusieurs éléments à la fois.

Le clip 1 peut être réalisé en un matériau qui est choisi parmi les matières plastiques ou les matières métalliques, déformables élastiquement.

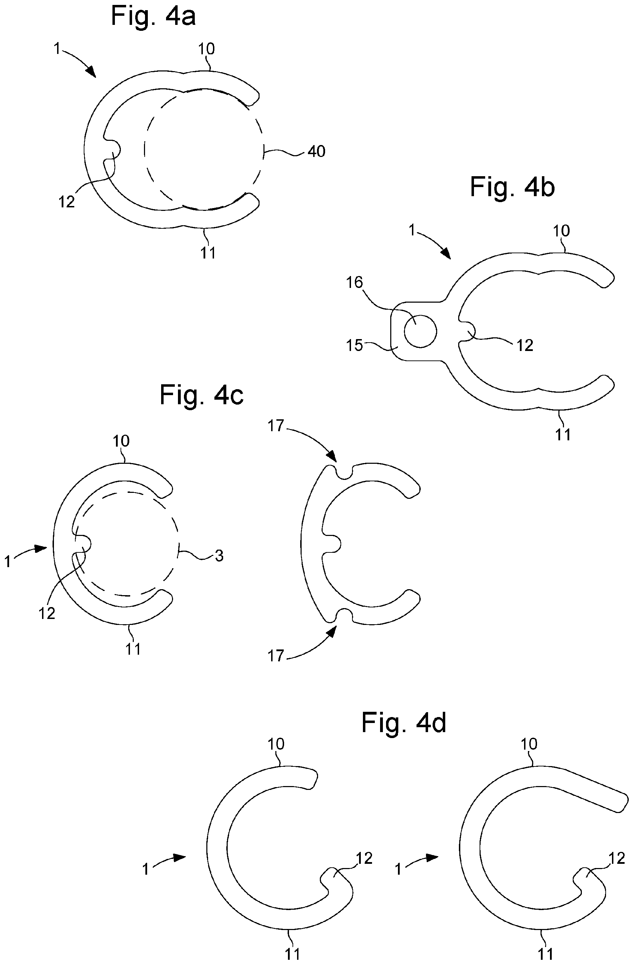

Selon un mode de réalisation alternatif visible à la figure 4a, le corps d'anneau du clip 1 présente deux arcs de cercle par bras 10, 11. Un tel agencement permet de former un cran d'arrêt et deux positions facilement distinguables par l'opérateur, tout en permettant d'éviter la perte du clip.

Le clip 1 peut également comprendre des moyens de manipulation, telle qu'une languette 15 avec éventuellement une ouverture 16 pour faciliter la manipulation du clip 1, comme illustré à la figure 4b. Les bras 10, 11 peuvent éventuellement présenter une forme elliptique de manière que seules les extrémités des bras 10, 11 reposent dans la rainure 40 contre le pourtour de l'arbre 2 de manière à devenir les moyens de manipulation avec éventuellement des ouvertures 17 pour faciliter la manipulation du clip 1, comme illustré à la figure 4c.

Encore selon un autre mode de réalisation alternatif visible à la figure 4d, le clip 1 se présente toujours sous la forme d'un corps d'anneau avec deux bras 10, 11 à extrémités ouvertes, et dont l'une des extrémités 10 ou 11 est recourbée vers l'intérieur du clip 1 pour former le bec de verrouillage 12 agencé pour coopérer avec l'ouverture 41 du canon 4.

La mise en place du clip 1, tel que visible sur la figure 4d, sur l'arbre 3 est réalisée comme suit : dans un premier temps, l'extrémité recourbée formant le bec de verrouillage est placée dans l'ouverture 41 du canon 4. L'autre extrémité ouverte étant ensuite passée autour du canon afin que le bras libre longe la rainure 40 et s'engage dans celle-ci jusqu'à ce que le clip se loge dans sa position verrouillée.

Dans les autres variantes présentées au dessin, la mise en place du clip 1 sur l'arbre 3 est réalisée comme suit : dans un premier temps, le clip 1 est positionné sur le canon 4, le bec de verrouillage étant placé en face de l'ouverture 41 et les bras pré-engagés dans la rainure 40 de manière que le clip 1 soit guidé sur le canon 4. Ensuite, l'opérateur pousse le clip 1 en butée contre le canon 4 pour faire passer le bec de verrouillage 12 au travers de l'ouverture 41 jusque dans la gorge 30 de l'arbre 3 et que le clip prenne sa position verrouillée.

L'extraction du clip 1se fait dans le sens inverse de celui de la mise en place. Dans le cas particulier de la variante illustrée à la figure 4c, les rayons intérieurs des bras ne sont pas coaxiaux avec le rayon du canon 4 ou de la rainure 40. Cela permet de pouvoir exercer une contrainte radiale, dirigée vers le centre du canon, afin d'écarter les extrémités ouvertes des bras 10, 11 pour faciliter l'extraction du clip. Les ouvertures 17 peuvent servir dans ce cas à maintenir les extrémités d'un outil sur le clip 1, sans risque que l'outil glisse et endommage le mouvement.

Grâce à ces différents aspects de l'invention, on dispose d'un dispositif de maintien d'un mobile de mouvement horloger facile à monter/ démonter et qui procure un maintien fiable du mobile sur son arbre lors du transport des mouvements horlogers.

La description qui précède correspond à un mode de réalisation préféré et ne saurait en aucun cas être considérée comme limitative, en ce qui concerne plus particulièrement la forme décrite pour les différents éléments structurels composant le dispositif de montage ou leurs matériaux.

## Revendications

1. Dispositif pour maintenir axialement un mobile (2) de mouvement horloger (100) autour d'un arbre (3), le mobile (2) comprenant une partie cylindrique (4) agencée pour être montée coaxialement sur l'arbre (3), le dispositif comprenant un clip (1) destiné à être monté sur la partie cylindrique (4) du mobile (2),
**caractérisé en ce que** le clip (1) comprend des moyens de maintien élastiques (10, 11) agencés pour coopérer avec la partie cylindrique (4) et enserrer la partie cylindrique sur une partie de son pourtour, et **en ce qu'**il comprend un bec (12) de verrouillage traversant une ouverture (41) s'étendant radialement vers l'intérieur de la partie cylindrique, le bec de verrouillage (12) étant agencé pour coopérer avec une gorge (30) de l'arbre (3) pour maintenir axialement le mobile (2) en place.

2. Dispositif selon la revendication 1, **caractérisé en ce que** la partie cylindrique (4) comprend une rainure (40) formée sur tout ou partie de son pourtour.

3. Dispositif selon la revendication 1 ou 2, **caractérisé en ce que** le clip (1) présente un corps d'anneau présentant deux bras (10, 11) à extrémités ouvertes, au moins l'un des deux bras étant déformable élastiquement, les bras (10, 11) formant les moyens de maintien.

4. Dispositif selon l'une des revendications 1 à 3, **caractérisé en ce que** le clip présente un rayon intérieur inférieur au rayon de la partie cylindrique (4) ou de la rainure (40) pour obtenir une déformation élastique des moyens de maintien élastique (10, 11) et assurer son maintien sans jeu sur la partie cylindrique (4).

5. Dispositif (1) selon l'une des revendications précédentes, **caractérisé en ce que** le clip (1) comprend des moyens de manipulation (15, 16, 17).

6. Dispositif selon l'une des revendications 1 à 5, **caractérisé en ce que** le bec (12) est placé à l'une des extrémités ouvertes.

7. Dispositif selon la revendication 1 à 5, **caractérisé en ce que** le corps d'anneau présente deux arcs de cercle par bras.

8. Dispositif selon les revendications 1 à 7, **caractérisé en ce que** le clip (1) est fabriqué à partir d'un fil.

9. Dispositif selon les revendications 1 à 8, **caractérisé en ce que** le clip (1) présente une forme elliptique de manière que seules les extrémités des bras (10, 11) reposent dans la rainure (40) contre le pourtour de l'arbre (2) et le bec de verrouillage (12) dans l'ouverture (41).

10. Dispositif selon les revendications 1 à 9, **caractérisé en ce qu'**il comprend un clinquant (5) disposé sur le mobile (2), le clip (1) maintenant à la fois le mobile (2) et le clinquant (5).
